# FASCICULE DE BREVET EUROPEEN

(11) **EP 0 811 448 B1**
(45) Date de publication et mention de la délivrance du brevet: **14.01.2004**
(21) Numéro de dépôt: 97401236.1
(22) Date de dépôt: 03.06.1997
(51) Int. Cl.: B23B 39/16

(54) **Dispositif de réglage de la position d'une broche d'usinage**
Regelvorrichtung der Position einer Bearbeitungsspindel
Adjusting device for the position of a working spindle

(30) Priorité: 04.06.1996 FR 9606884
(43) Date de publication de la demande: 10.12.1997
(73) Titulaire: AUTOMOBILES PEUGEOT, 75116 Paris (FR); AUTOMOBILES CITROEN, 92200 Neuilly-sur-Seine (FR)
(72) Inventeur: Laurens, Pierre, 42100 Saint-Etienne (FR)
(74) Mandataire: Thinat, Michel

(56) Documents cités:
- DE-A- 2 616 550
- US-A- 3 203 282
- US-A- 4 022 539
- US-A- 4 365 916
- PATENT ABSTRACTS OF JAPAN vol. 18, no. 37 (M-1545), 20 Janvier 1994 & JP 05 269604 A (HITACHI SEIKO), 19 Octobre 1993,
- PATENT ABSTRACTS OF JAPAN vol. 95, no. 11, 8 Août 1995 & JP 07 204916 A (AISIN)
- PATENT ABSTRACTS OF JAPAN vol. 16, no. 376 (M-1294), 12 Août 1992 & JP 04 122505 A (SABURO WATANABE), 23 Avril 1992,
- PATENT ABSTRACTS OF JAPAN vol. 17, no. 365 (M-1442), 9 Juillet 1993 & JP 05 057513 A (MITSUI SEIKO KOGYO), 9 Mars 1993,

## Description

La présente invention concerne un dispositif de réglage de la position d'une broche d'usinage ou analogue sur un support relativement à un élément de référence de ce support.

L'invention s'applique en particulier aux boîtiers à têtes multiples pour l'usinage en grande série de pièces d'automobile.

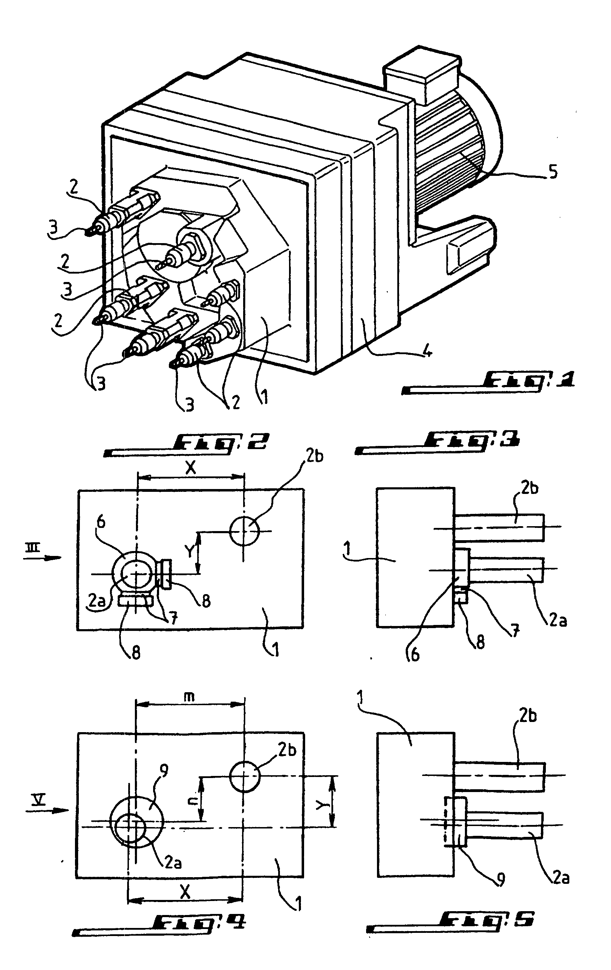

Un tel boîtier à têtes multiples est représenté à titre d'exemple en figure 1 en tant que composant d'une machine d'usinage qui permet d'usiner en l'air, par perçage, par rodage, lamage et alésage, plusieurs trous à la fois d'une pièce à usiner. Ce boîtier comprend un corps 1 de support d'un certain nombre de broches d'usinage 2 portant respectivement des outils d'usinage 3, tels que des forets, un carter 4 portant le corps 1 et contenant tous les éléments de cinématique (engrenages, poulies, courroies) qui permettent d'entraîner en rotation les broches 2, et un moteur d'entraînement 5. Les distances entre les broches d'usinage 2 dépendent directement de la position des trous à réaliser dans la pièce d'usinage. Tout écart des distances entre les broches 2 se retrouve sur la qualité d'usinage de la pièce. Les critères de qualité d'acceptation des machines d'usinage pourvues de boîtiers à têtes multiples du genre de la figure 1 imposent généralement dans la plupart des cas de maintenir un entraxe entre les broches 2 de plus ou moins 0,01 mm pendant l'opération d'usinage. Cette tolérance est extrêmement difficile à obtenir en fonctionnement car la réalisation du corps de support 1 en usinage est très délicate, le carter 4 et le moteur 5 dégagent de la chaleur en fonctionnement qui est transmise au corps de support 1 qui, en se dilatant, fait varier les cotes entre les broches 2 entre le fonctionnement et l'arrêt de la machine, et les broches 2 et les outils 3 fléchissent sous l'effet des efforts d'usinage de sorte que les cotes entres les broches 2 sont modifiées. Le réglage doit donc être effectué sur machine en fonctionnement (soit à chaud).

Afin de prendre en compte les écarts de distances entre les broches d'usinage, un dispositif a été prévu pour modifier et régler les distances ou cotes entre ces broches.

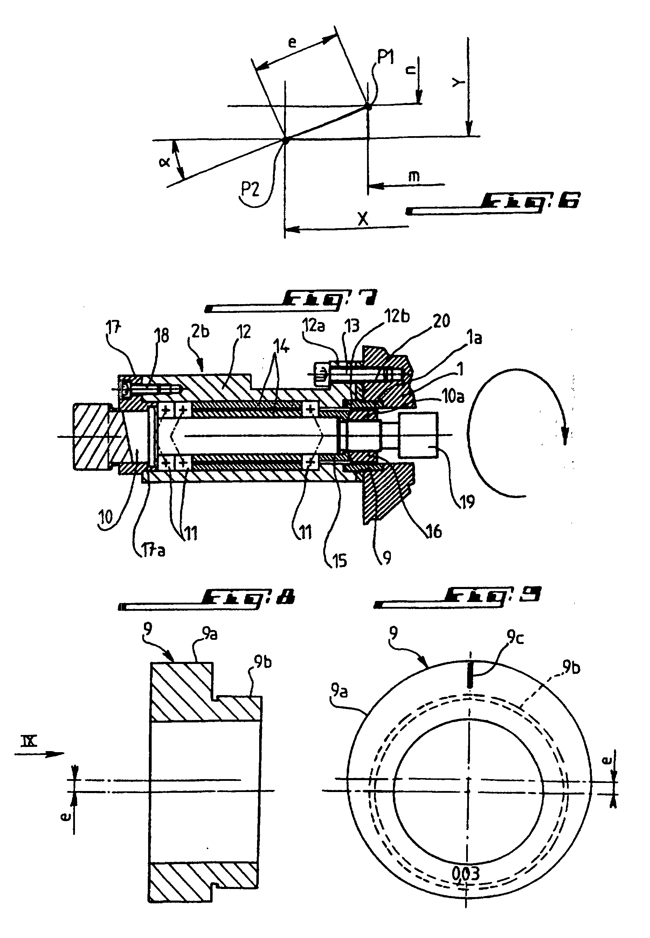

Les figures 2 et 3 représentent schématiquement un exemple de dispositif connu pour régler la distance séparant deux broches d'un boîtier à têtes multiples.

Sur ces figures, la broche à régler 2a, montée sur le corps de support 1, est logée dans un boîtier porte-broche 6 fixé au corps de support 1 et est séparée d'une broche de référence 2b du corps 1 suivant des cotes à obtenir X et Y. Le réglage des cotes X et Y est réalisé par deux cales de réglage 7 interposées entre deux blocs de référence 8 solidaires du corps 1 et le boîtier porte-broche 6 de façon qu'en modifiant l'épaisseur des cales 7, les cotes X et Y souhaitées sont obtenues.

Cependant, ce dispositif connu nécessite l'utilisation de deux blocs de référence et de deux cales de réglage par broche à régler.

La présente invention a pour but d'éliminer l'inconvénient ci-dessus du dispositif connu en proposant un dispositif de réglage de la position d'une broche d'usinage ou analogue sur un support relativement à un élément de référence de ce support, la broche ayant son arbre supporté à rotation dans un boîtier solidaire du support et qui est caractérisé en ce qu'il comprend une bague excentrique à deux parties cylindriques excentrées montées respectivement dans un alésage cylindrique du boîtier co-axial à l'arbre et un alésage cylindrique du support et pouvant être orientée relativement au support pour régler la position radiale de la broche relativement au support et positionner ainsi la broche à une distance souhaitée de l'élément de référence.

La bague excentrique est orientée relativement au support et au boîtier porte-arbre par positionnement de celle-ci réalisée manuellement.

La bague excentrique est montée amoviblement dans le boîtier porte-arbre et le support.

L'une des parties cylindriques de la bague excentrique est montée dans l'alésage du boîtier porte-arbre suivant un ajustement légèrement serré et l'autre partie cylindrique de la bague excentrique est montée dans l'alésage du support suivant un ajustement glissant, ou inversement, la partie cylindrique est montée dans l'alésage du boîtier porte-arbre suivant un ajustement glissant et l'autre partie cylindrique dans l'alésage du support suivant un ajustement légèrement serré.

Le dispositif comprend un jeu de bagues excentriques à parties cylindriques d'excentricités différentes par type de broche de façon à compenser toute valeur d'écart de position de la broche de la distance souhaitée relativement à l'élément de référence.

La valeur d'excentration des parties cylindriques de la bague excentrique est indiquée sur celle-ci et la direction de l'excentration de la bague excentrique est repérée sur celle-ci.

L'invention propose également un boîtier à têtes multiples en particulier d'une machine d'usinage permettant d'usiner par perçage, rodage, lamage ou alésage plusieurs trous à la fois d'une pièce à usiner et comprenant un corps de support d'un certain nombre de broches d'usinage portant des outils d'usinage et qui est caractérisé en ce qu'au moins l'une des broches d'usinage comprend un dispositif tel que défini précédemment pour régler la position de la broche sur le corps de support relativement à une autre broche d'usinage de ce corps.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
La figure 1 représente en perspective un boîtier à têtes multiples pour l'usinage de pièces d'automobile.
La figure 2 est une vue de face d'un boîtier à deux broches d'usinage comportant un dispositif connu à cales de réglage de la position d'une broche relativement à l'autre broche de référence.
La figure 3 est une vue de côté suivant la flèche III de la figure 2.
La figure 4 est une vue semblable à celle de la figure 2 et représente le principe de réglage de la position d'une broche d'usinage par rapport à une broche de référence par utilisation d'une bague excentrique conforme à l'invention.
La figure 5 est une vue de côté suivant la flèche V de la figure 4.
La figure 6 représente la méthode permettant de déterminer la valeur de l'excentration de la bague excentrique et son orientation pour régler la broche d'usinage à ses côtes souhaitées relativement à la broche de référence.
La figure 7 représente en coupe longitudinale une broche d'usinage pourvue d'une bague excentrique de l'invention.
La figure 8 est une vue agrandie de la bague excentrique de l'invention.
La figure 9 est une vue de côté suivant la flèche IX de la figure 8.

L'invention va être décrite en application à un boîtier à têtes multiples du genre précédemment décrit en référence à la figure 1 et faisant partie d'une machine d'usinage pour percer, tarauder, lamer et aléser plusieurs trous à la fois d'une pièce d'usinage, mais il est bien entendu qu'elle peut s'appliquer à tout autre système ou dispositif où la position d'une pièce sur un support peut être réglée précisément par rapport à un élément de référence de ce support.

Le principe, suivant l'invention, du réglage extrêmement précis de la distance séparant deux broches d'usinage d'un boîtier à têtes multiples d'usinage va être décrit en référence aux figures 4 à 6.

En se reportant plus particulièrement aux figures 4 et 5, la broche d'usinage 2a située à gauche de la figure 4 doit normalement être distante de l'autre broche d'usinage 2b suivant les côtes X et Y, mais la broche à régler 2a se trouve écartée de la distance souhaitée de la broche de référence 2b d'une valeur définie par les cotes m et n.

Pour supprimer cet écart et amener la broche à régler 2a aux cotes souhaitées X et Y, l'invention comprend une broche excentrique 9 montée entre le corps de support 1 et la broche à régler 2a de façon qu'en orientant la bague excentrique 9 relativement au corps de support 1 par orientation manuelle de celle-ci, la broche 2a soit amenée à une position radiale relativement au corps de support telle que la broche 2a soit correctement positionnée aux côtes X et Y relativement à la broche de référence.

La figure 6 montre que par un calcul simple à partir de la résolution d'un triangle rectangle, la valeur d'excentration e de la bague excentrique 9, c'est-à-dire l'écart entre la position P1 de la broche à régler 2a aux côtes m et n et la position P2 de cette broche aux cotes à obtenir X et Y, et l'orientation angulaire α de la bague 9 peuvent être facilement déterminées. En pratique, un jeu de bagues excentriques 9 gravées en valeurs et en directions d'excentration sera disponible par type de broche pour supprimer toutes valeurs d'écart de la broche de sa distance nominale de la broche de référence.

Les figures 7 à 9 représentent un mode de réalisation concret d'une broche d'usinage pourvue d'une bague d'excentricité conforme à l'invention.

En se reportant à ces figures, la broche d'usinage 2a comprend un arbre de broche 10 supporté à rotation, par l'intermédiaire de roulements de précision axialement espacés 11, dans un boîtier porte-arbre 12 amoviblement fixé au corps de support 1 par au moins une vis de fixation 13. Les roulements 11 sont maintenus axialement espacés dans le boîtier 12 par un jeu d'entretoises comprenant deux entretoises centrales coaxiales 14 interposées entre les roulements 11 coaxialement à l'arbre de broche 10 et une entretoise 15 serrée contre le roulement 11 à droite de la figure 7 par un écrou de blocage 16 monté sur une partie filetée correspondante 10a de l'arbre 10. Les roulements 11 sont maintenus dans le boîtier 12 par un couvercle avant 17 fixé au boîtier 12 par au moins une vis de fixation 18 et ayant une partie d'extrémité cylindrique interne 17a en appui sur le roulement le plus à gauche de la figure 7. La référence 19 concerne un système d'entraînement en rotation de l'arbre de broche et qui est du type pouvant supporter des écarts radiaux et axiaux par rapport à l'axe longitudinal de l'arbre 10. Une cale 20 est interposée entre une bride 12a de fixation, par la vis 13, du boîtier 12 au corps de support 1 et ce dernier de façon à régler la position axiale de la broche 2 relativement au corps de support 1.

La bague excentrique 9 de l'invention permettant de régler la position radiale de la broche relativement au corps de support 1 pour supprimer tout écart de la broche 2a par rapport à la broche de référence de sa distance souhaitée ou nominale, est montée entre le boîtier 12 et le corps de support 1. Les figures 8 et 9 représentent précisément la bague excentrique 9 qui comprend deux parties cylindriques 9a, 9b excentrées d'une valeur d'excentration e avec la partie cylindrique 9a d'un diamètre supérieur, inférieur ou égal à celui de la partie cylindrique 9b. La partie cylindrique 9a de la bague 9 est montée dans un alésage cylindrique 12b du boîtier 12 suivant un ajustement légèrement serré et la partie cylindrique 9b de cette bague est montée dans un alésage cylindrique la du corps de support 1 suivant un ajustement glissant, ou inversement, de sorte que la bague excentrique 9, qui n'est pas immobilisée en rotation, peut être retirée sans effort du corps 12 et du corps de support 1 après dévissage des vis de fixation 13. La partie cylindrique 9b permet de centrer et de déterminer la position du boîtier de broche 12, donc de la broche 2a, sur le corps de support 1 relativement à la broche de référence. S'il s'avère au cours du réglage de la machine d'usinage à boîtier à têtes multiples que la distance de la broche 2a relativement à la broche de référence n'est pas correcte pour usiner la pièce d'usinage dans les tolérances prescrites, la broche doit être déplacée d'une valeur donnée suivant une direction donnée de façon à rattraper cet écart. A cet effet, il suffit de placer une bague excentrique 9 entre le boîtier 12 et le corps de support 1 ayant une valeur d'excentration égale à l'écart à rattraper et d'orienter cette bague par positionnement manuel de celle-ci relativement au corps de support 1 pour positionner correctement le corps de broche 12 relativement au corps de support 1. Comme déjà mentionné précédemment, un jeu de bagues excentriques 9 est disponible pour chaque type de broche de façon à rattraper toutes les valeurs d'écart susceptibles de se produire. Comme montré en figure 9, chaque bague excentrique 9 comporte, gravés sur celle-ci une valeur d'excentration, par exemple de 0,03 mm, et un repère 9c de l'excentration maximum permettant à l'opérateur d'orienter angulairement la bague 9 relativement au corps de support 1 dans le sens souhaité. Ainsi, la même bague excentrique 9 est utilisée pour rattraper un écart ou décalage donné quelle que soit la direction de ce décalage. De plus, la bague excentrique 9 n'a pas besoin d'être orientée angulairement de façon très précise car le défaut d'orientation angulaire engendré est négligeable par rapport à l'écart à rattraper.

Le dispositif de réglage conforme à l'invention est d'une conception extrêmement simple, procure un gain de place important du fait que la bague excentrique est comprise dans le volume du boîtier porte-broche, est compact dans la mesure où le diamètre des parties cylindriques de la bague excentrique est inférieur au diamètre extérieur des roulements de l'arbre de broche, est d'un coût peu élevé et la modification du réglage de la position de la broche d'usinage est extrêmement aisée.

Bien entendu, chaque broche d'usinage du boîtier à têtes multiples de la figure 1 peut comporter un dispositif de réglage conforme à l'invention.

## Revendications

1. Dispositif de réglage de la position d'une broche d'usinage (2a) ou analogue sur un support (1) relativement à un élément de référence de ce support, la broche (2a) ayant son arbre (10) supporté à rotation dans un boîtier (12) solidaire du support (1), **caractérisé en ce qu'**il comprend une bague excentrique (9) à deux parties cylindriques excentrées (9a, 9b) montées respectivement dans un alésage cylindrique (12b) du boîtier (12) coaxial à l'arbre (10) et un alésage cylindrique (1a) du support (1) et pouvant être orientée relativement au support (1) pour régler la position radiale de la broche (2a) relativement au support (1) et positionner ainsi la broche (2a) à une distance souhaitée de l'élément de référence.

2. Dispositif selon la revendication 1, **caractérisé en ce que** le diamètre des parties cylindriques (9a, 9b) de la bague excentrique (9) est inférieur au diamètre des roulements (11) de l'arbre de broche (10).

3. Dispositif selon la revendication 1 ou 2, **caractérisé en ce que** la bague excentrique (9) est orientée relativement au support (1) et au boîtier porte-arbre (12) par orientation de celle-ci réalisée manuellement.

4. Dispositif selon l'une des revendications précédentes, **caractérisé en ce que** la bague excentrique (9) est montée amoviblement dans le boîtier porte-arbre (12) et le support (1).

5. Dispositif selon la revendication 4, **caractérisé en ce que** la partie cylindrique (9a) de la bague excentrique (9) est montée dans l'alésage (12b) du boîtier porte-arbre (12) suivant un ajustement légèrement serré et l'autre partie cylindrique (9b) de la bague excentrique (9) est montée dans l'alésage (1a) du support (1) suivant un ajustement glissant, ou, inversement, la partie cylindrique est montée dans l'alésage du boîtier porte-arbre suivant un ajustement glissant et l'autre partie cylindrique dans l'alésage du support suivant un ajustement légèrement serré.

6. Dispositif selon l'une des revendications précédentes, **caractérisé en ce qu'**il comprend un jeu de bagues excentriques (9) à parties cylindriques (9b) d'excentricités différentes par type de broche de façon à compenser tout écart de position d'une broche (2a) de la distance souhaitée relativement à l'élément de référence.

7. Dispositif selon l'une des revendications précédentes, **caractérisé en ce que** la valeur d'excentration des parties cylindriques (9a, 9b) de la bague excentrique (9) est indiquée sur celle-ci.

8. Dispositif selon l'une des revendications précédentes, **caractérisé en ce que** la direction de l'excentration de la bague excentrique (9) est repérée sur celle-ci.

9. Dispositif selon l'une des revendications précédentes, **caractérisé en ce que** l'élément de référence est une broche d'usinage (2b).

10. Boîtier à têtes multiples en particulier d'une machine d'usinage permettant d'usiner par perçage, taraudage, lamage ou alésage plusieurs trous à la fois d'une pièce d'usinage et comprenant un corps de support (1) d'un certain nombre de broches d'usinage (2a, 2b) portant des outils d'usinage (3), **caractérisé en ce qu'**au moins l'une des broches d'usinage (2a) comprend un dispositif tel que défini dans l'une quelconque des revendications 1 à 9 pour régler la position de la broche (2a) sur le corps de support (1) relativement à une autre broche d'usinage (2b) de ce corps.

## Patentansprüche

1. Vorrichtung zum Einstellen der Stellung einer Bearbeitungsspindel (2a) oder dergleichen an einem Träger (1) relativ zu einem Bezugsteil dieses Trägers, wobei die Spindel (2a) mit ihrer Spindelwelle (10) drehbar in einem fest mit dem Träger (1) verbundenen Gehäuse (12) gelagert ist, **dadurch gekennzeichnet, dass** sie einen Exzenterring (9) mit zwei exzentrischen, zylinderförmigen Teilen (9a, 9b) enthält, die in einer zylindrischen Bohrung (12b) des Gehäuses (12) koaxial zur Welle (9) bzw. in einer zylindrischen Bohrung (1a) des Trägers (1) gelagert sind und relativ zum Träger (1) ausgerichtet werden können, um die radiale Stellung der Spindel (2a) relativ zum Träger (1) einzustellen und somit die Spindel (2a) in einem gewünschten Abstand vom Bezugsteil positionieren.

2. Vorrichtung nach Anspruch 1, **dadurch gekennzeichnet, dass** der Durchmesser der zylindrischen Teile (9a, 9b) des Exzenterrings (9) kleiner ist als der Durchmesser der Wälzlager (11) der Spindelwelle (10).

3. Vorrichtung nach Anspruch 1 oder 2, **dadurch gekennzeichnet, dass** der Exzenterring (9) relativ zum Träger (1) und zum Wellentraggehäuse (12) durch manuell erfolgende Ausrichtung desselben ausgerichtet wird.

4. Vorrichtung nach einem der vorangehenden Ansprüche, **dadurch gekennzeichnet, dass** der Exzenterring (9) abnehmbar im Wellentraggehäuse (12) und im Träger (1) gelagert ist.

5. Vorrichtung nach Anspruch 4, **dadurch gekennzeichnet, dass** der eine zylindrische Teil (9a) des Exzenterrings (9) in der Bohrung (12b) des Wellentraggehäuses (12) mit leichtem Presssitz gelagert ist und der andere zylindrische Teil (9a) des Exzenterrings (9) mit Gleitsitz in der Bohrung (1a) des Trägers (1) gelagert ist, oder umgekehrt der eine zylindrische Teil mit Gleitsitz in der Bohrung des Wellentraggehäuses gelagert ist und der andere zylindrische Teil mit leichtem Presssitz in der Bohrung des Trägers gelagert ist.

6. Vorrichtung nach einem der vorangehenden Ansprüche, **dadurch gekennzeichnet, dass** sie einen Satz von Exzenterringen (9) mit zylindrischen Teilen (9b) enthält, die sich je nach Spindelart in ihrer Exzentrizität unterscheiden, so dass jegliche Abweichung der Stellung einer Spindel (2a) vom gewünschten Abstand relativ zum Bezugsteil ausgeglichen wird.

7. Vorrichtung nach einem der vorangehenden Ansprüche, **dadurch gekennzeichnet, dass** der Wert der Exzentrizität der zylindrischen Teile (9a, 9b) des Exzenterrings (9) auf diesem angegeben ist.

8. Vorrichtung nach einem der vorangehenden Ansprüche, **dadurch gekennzeichnet, dass** die Richtung der Exzentrizität des Exzenterrings (9) auf diesem markiert ist.

9. Vorrichtung nach einem der vorangehenden Ansprüche, **dadurch gekennzeichnet, dass** das Bezugsteil eine Bearbeitungsspindel (2b) ist.

10. Mehrkopfgehäuse insbesondere einer Bearbeitungsmaschine zur Bearbeitung durch Bohren, Gewindeschneiden, Senken oder Aufbohren gleichzeitig mehrerer Löcher eines Werkstücks, enthaltend einen Tragkörper (1) zum Tragen einer Anzahl von Bearbeitungsspindeln (2a, 2b), die Bearbeitungswerkzeuge (3) tragen, **dadurch gekennzeichnet, dass** zumindest eine der Bearbeitungsspindeln (2a) eine Vorrichtung wie in einem der Ansprüche 1 bis 9 definiert enthält, um die Stellung der Spindel (2a) an dem Tragkörper (1) relativ zu einer weiteren Bearbeitungsspindel (2b) dieses Körpers einzustellen.

## Claims

1. A device for adjusting the position of a working spindle (2a) or like element on a support (1) relatively to a reference element of this support, the shaft (10) of the spindle (2a) being journalled rotatably in a housing (12) rigidly connected to the support (1), **characterised in that** said device includes an eccentric collar (9) having two off-centre cylindrical parts (9a, 9b) mounted in a cylindrical bore (12b) of the housing (12) coaxial with the shaft (10) and in a cylindrical bore (1 a) of the support (1) respectively, and able to be oriented relatively to the support (1) in order to adjust the radial position of the spindle (2a) relatively to the support (1) and thus to position the spindle (2a) at a desired distance from the reference element.

2. A device according to claim 1, **characterised in that** the diameter of the cylindrical parts (9a, 9b) of the eccentric collar (9) is smaller than the diameter of the rolling bearings (11) of the spindle shaft (10).

3. A device according to claim 1 or 2, **characterised in that** the eccentric collar (9) is oriented with respect to the support (1) and to the shaft-supporting housing (12) by means of the manually-effected orientation of the latter.

4. A device according to any one of the preceding claims, **characterised in that** the eccentric collar (9) is mounted removably in the shaft-supporting housing (12) and the support (1 ).

5. A device according to claim 4, **characterised in that** the cylindrical part (9a) of the eccentric collar (9) is mounted in the bore (12b) of the shaft-supporting housing (12) with a light press fit and the other cylindrical part (9b) of the eccentric collar (9) is mounted in the bore (1a) of the support (1) with a sliding fit or, conversely, the cylindrical part is mounted in the bore of the shaft-supporting housing with a sliding fit and the other cylindrical part in the bore of the support with a light press fit.

6. A device according to any one of the preceding claims, **characterised in that** it includes a set of eccentric collars (9) comprising cylindrical parts (9b) having eccentricities differing according to the type of spindle, so as to compensate for any deviation of the position of a spindle (2a) from the desired distance relatively to the reference element.

7. A device according to any one of the preceding claims, **characterised in that** the value of the off-centre offset of the cylindrical parts (9a, 9b) of the eccentric collar (9) is marked on the latter.

8. A device according to any one of the preceding claims, **characterised in that** the direction of the off-centre offset of the eccentric collar (9) is marked on the latter.

9. A device according to any one of the preceding claims, **characterised in that** the reference element is a working spindle (2b).

10. A housing having multiple heads, in particular of a machining centre which permits machining by drilling, tapping, countersinking or boring a plurality of holes simultaneously in a workpiece, and comprising a support body (1) for a given number of working spindles (2a, 2b) holding cutting tools (3), **characterised in that** at least one of the working spindles (2a) includes a device as defined in any one of claims 1 to 9 for adjusting the position of the spindle (2a) on the support body (1) relatively to another working spindle (2b) of said body.
